# EUROPÄISCHE PATENTSCHRIFT

(11) **EP 1 306 185 B1**
(45) Veröffentlichungstag und Bekanntmachung des Hinweises auf die Patenterteilung: **04.10.2006**
(21) Anmeldenummer: 02020363.4
(22) Anmeldetag: 12.09.2002
(51) Int. Cl.: B29C 45/04, B29C 45/17

(54) **Dreheinrichtung für Horizontal-Spritzgiessmaschinen**
Rotating device for horizontal injection moulding machines
Dispositif de rotation pour machines de moulage par injection horizontales

(30) Priorität: 24.10.2001 DE 10152394
(43) Veröffentlichungstag der Anmeldung: 02.05.2003
(73) Patentinhaber: Krauss-Maffei Kunststofftechnik GmbH, 80997 München (DE)
(72) Erfinder: Wohlrab, Walter, 91781 Weissenburg (DE)
(74) Vertreter: Zollner, Richard

(56) Entgegenhaltungen:
- EP-A- 0 895 848
- WO-A-01/10624
- GB-A- 2 300 142
- US-A- 4 330 257

## Beschreibung

Die Erfindung bezieht sich auf eine Dreheinrichtung für Horizontal-Spritzgießmaschinen gemäß dem Oberbegriff des Patentanspruchs 1.

Eine derartige Dreheinrichtung ist beispielsweise aus der WO 01/10624 A1 bekannt. Diese bekannte Dreheinrichtung weist eine Grundplatte und einen auf der Grundplatte drehbar gelagerten Drehteller auf, wobei die Grundplatte mit dem Drehteller auf dem Maschinenbett einer Horizontal-Spritzgießmaschine zwischen einer beweglichen und einer festen Formaufspannplatte in Axialrichtung verschiebbar montiert wird. Im Betrieb trägt der Drehteller eine dritte Formplatte, eine sogenannte Wendeplatte mit Werkzeughälften, die mit entsprechenden Formwerkzeughälften an der beweglichen bzw. der festen Aufspannplatte zusammenwirken.

Die bekannte Dreheinrichtung ist im Maschinenbett der Horizontal-Spritzgießmaschine installiert. Beim Umrüsten einer Standardspritzgießmaschine müssen deshalb die übrigen Bauelemente entsprechend geändert werden, was nur mit erheblichen konstruktivem Aufwand möglich ist.

Demgegenüber liegt der Erfindung die Aufgabe zugrunde, eine Dreheinrichtung der Eingangs genannten Art zu schaffen, die auch bei bestehenden Maschinen einfach eingesetzt werden kann.

Diese Aufgabe erfolgt durch eine Dreheinrichtung mit den Merkmalen des Patentanspruchs 1; die abhängigen Patentansprüche betreffen vorteilhafte Ausgestaltungen der Erfindung.

Erfindungsgemäß hat die Dreheinrichtung einen modularen Aufbau aus einem Modulrahmen, in dem die Grundplatte und der Drehteller verschiebbar montiert sind.

Der Modulrahmen kann als ein Einheit auf dem Maschinenbett montiert werden, wobei die bewegliche und die feste Aufspannplatte auf dem Modulrahmen montiert werden. Dazu sind vorzugsweise Montagemittel für die feste Aufspannplatte und Führungen für die bewegliche Aufspannplatte vorgesehen.

Sinnvollerweise sind Antriebsmittel zum Verschieben der Grundplatte mit dem Drehteller in dem Modulrahmen integriert, beispielsweise in Form von Hydraulikzylindern, Spindeln oder dergleichen. Daneben ist es möglich, die Antriebsmittel in Form von Zahnstangen auszubilden, wobei eine Zahnstange fest am Modulrahmen befestigt ist, die andere an der beweglichen Aufspannplatte und beide Zahnstangen mit einem Ritzel kämmen, das an der Grundplatte befestigt ist. Bei einem derartigen Zahnstangenaufbau, der grundsätzlich aus der WO 01/10624 A1 bekannt ist, bewegt die bewegliche Aufspannplatte die Grundplatte, und zwar um eine Strecke, die der halben Bewegungsstrecke der beweglichen Aufspannplatte entspricht. Erfindungsgemäß sind die Zahnstangen und das Ritzel im Modulrahmen integriert, und der Modulrahmen weist Führungen für die bewegliche Zahnstange auf.

Die Grundplatte kann als massive Platte ausgebildet sein oder Aussparungen aufweisen bzw. als Rahmenkonstruktion aufgebaut sein (Schweißkonstruktion).

Vorzugsweise weist der Modulrahmen Befestigungsmittel zum Befestigen an dem Maschinenbett einer Spritzgießmaschine auf.

Eine Ausführungsform der Erfindung wird anhand der beigefügten Zeichnungen erläutert. Es zeigen:
- Fig. 1: eine Spritzgießmaschine in Perspektivdarstellung,
- Fig. 2: eine perspektivische Aufsicht auf einen Modulrahmen,
- Fig. 3: einen Schnitt durch den Modulrahmen mit Drehteller, und
- Fig. 4: eine perspektivische Unteransicht des Modulrahmens.

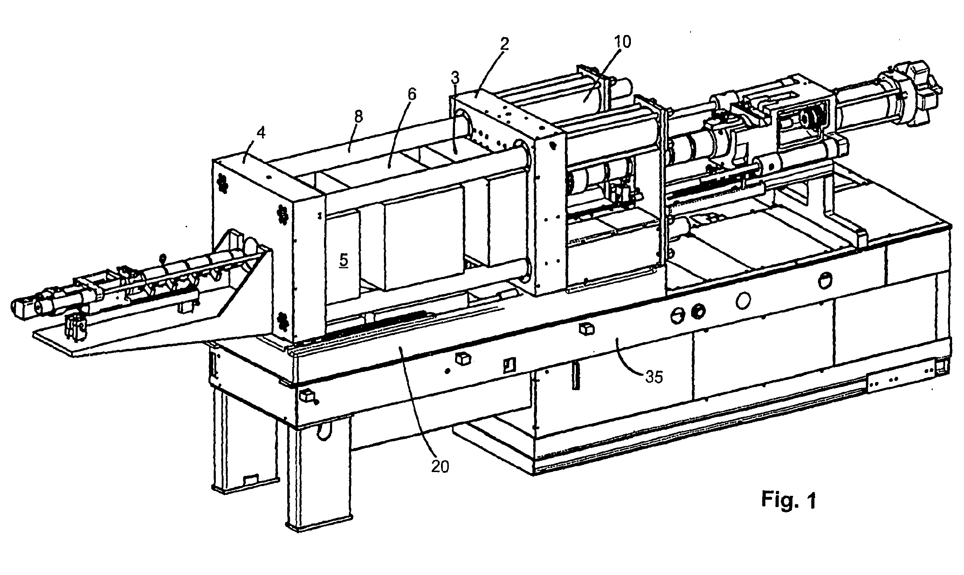

Fig. 1 zeigt eine Spritzgießmaschine mit einer festen Formaufspannplatte 2, einer beweglichen Formaufspannplatte 4 und einer Wendeplatte 6. Die Formaufspannplatten tragen Formwerkzeuge 3, 5, die zusammen mit der Wendeplatte 6 Kavitäten zum Spritzgießen von Kunststofformteilen bilden. Die bewegliche Formaufspannplatte 4 wird über Holme 8, die durch die feste Formaufspannplatte geführt sind, auf die feste Formaufspannplatte 2 zu oder von ihr weg bewegt. Weiterhin dargestellt sind ein Antrieb 10 zum Bewegen der Aufspannplatte 4 und Spritzgießeinheiten.

Der gesamte Aufbau aus Antrieb und Formaufspannplatten ist auf einem Modulrahmen 20 gelagert, der seinerseits auf einem Maschinenbett 35 der Spritzgießmaschine befestigt ist.

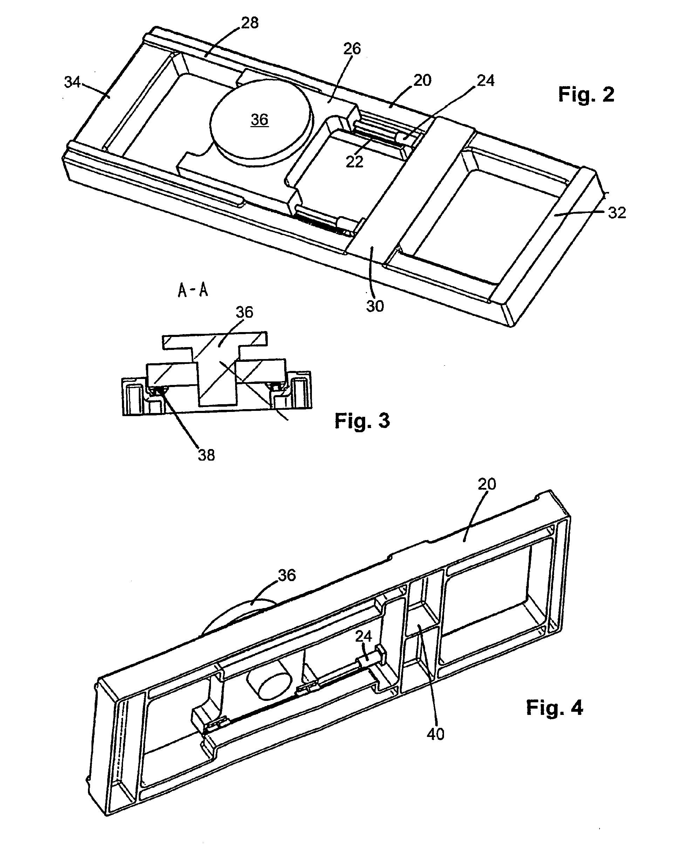

Fig. 2 und 4 zeigen in perspektivischer Aufsicht bzw. Unteransicht Einzelheiten des Modulrahmens, und Fig. 3 zeigt einen Schnitt durch den Drehteller im Modulrahmen.

In dem Modulrahmen 20 ist eine Grundplatte 26 in Linear- oder Gleitlagern 22 verschiebbar gelagert, wobei die Grundplatte 26 über Hydraulikzylinder 24 oder Spindeln oder dergleichen verschoben werden kann. Die Grundplatte 26 trägt einen Drehteller 36, der in Lagern 38 drehbar gelagert ist. Desweiteren weist der Modulrahmen an seiner Oberseite Gleitführungen 28 zum Führen der beweglichen Aufspannplatte auf. Eine Strebe 30 dient der Aufnahme der festen Aufspannplatte. Streben 32, 34 schließen den Modulrahmen nach außen ab und dienen beispielsweise der Abstützung einer Platte des Antriebs.

Wie insbesondere aus der Fig. 4 ersichtlich ist, ist der Modulrahmen hohl aufgebaut, wobei die Strebe 30 zur Aufnahme der festen Aufspannplatte durch eine Querwand 40 verstärkt ist. Der Modulrahmen kann beispielsweise als Gußteil ausgebildet sein.

Der drehbar gelagerte Drehteller 36 kann beispielsweise über einen Zahnkranz und ein damit kämmendes Ritzel angetrieben werden, wie es aus der WO 01/10624 A1 bekannt ist. Erfindungsgemäß kann dabei das Antriebsritzel bzw. die Antriebsquelle für das Antriebsritzel in Form eines Elektro- oder Hydromotors in den Modulrahmen integriert sein.

Zur Umrüstung einer Standardspritzgießmaschine müssen lediglich der Antrieb, die Holme und die bewegliche Aufspannplatte vom Maschinenbett abgenommen werden, so daß der erfindungsgemäße Modulrahmen 20 auf das Maschinenbett 35 aufgesetzt werden kann. Anschließend werden die vorher abgenommenen Teile wieder montiert, ohne das an diesen Bauelementen Modifikationen vorgenommen werden müssen. Auf diese Weise wird bei der Umrüstung lediglich die Bauhöhe der Standardspritzgießmaschine verändert.

In an sich bekannter Weise weist die Grundplatte 26 Ausnehmungen auf, so daß Bauteile, die aus der Wendeplatte 6 entnommen wurden durch die Zwischenräume zwischen der Strebe 34 und der Grundplatte 26 bzw. der Grundplatte 26 und der Strebe 30 nach unten fallen können.

Eine vorteilhafte Ausgestaltung der Grundplatte ergibt sich dadurch, daß sie nicht als massives Element ausgebildet ist sondern weitere Aussparungen aufweist bzw. eine Rahmenkonstruktion aufweist, beispielsweise mit einem umlaufenden Rahmen, wobei aus den Ecken des Rahmens Verstrebungen zu einer Nabe im Zentrum des Rahmens geführt sind.

## Patentansprüche

1. Dreheinrichtung für eine Horizontal-Spritzgießmaschine mit einer Grundplatte (26) und einem auf der Grundplatte drehbar gelagerten Drehteller (36), **gekennzeichnet durch** einen Modulrahmen (20), in dem die Grundplatte mit dem Drehteller verschiebbar montiert ist.

2. Dreheinrichtung nach Anspruch 1, **dadurch gekennzeichnet, daß** der Modulrahmen Führungen (28) für eine bewegliche Formaufspannplatte (4) aufweist.

3. Dreheinrichtung nach Anspruch 2, **dadurch gekennzeichnet, daß** der Modulrahmen Montagemittel (30) für eine feste Formaufspannplatte (2) aufweist.

4. Dreheinrichtung nach Anspruch 1, 2 oder 3, **dadurch gekennzeichnet , daß** im Modulrahmen Antriebsmittel (24) zum Verschieben der Grundplatte vorgesehen sind.

5. Dreheinrichtung nach Anspruch 4, **dadurch gekennzeichnet, daß** die Antriebsmittel Hydraulikzylinder sind.

6. Dreheinrichtung nach Anspruch 4, **dadurch gekennzeichnet, daß** die Antriebsmittel eine feste und eine bewegliche Zahnstange aufweisen und ein Ritzel, das mit der Grundplatte verbunden ist.

7. Dreheinrichtung nach einem der Ansprüche 1 bis 6, **dadurch gekennzeichnet, daß** die Grundplatte als Rahmen mit Aussparungen gebildet ist.

8. Dreheinrichtung nach einem der Ansprüche 1 bis 7, **dadurch gekennzeichnet, daß** der Modulrahmen Befestigungsmittel zum Befestigen am Maschinenbett einer Spritzgießmaschine aufweist.

9. Horizontal-Spritzgießmaschine mit einer Dreheinrichtung nach einem der vorstehenden Ansprüche.

## Claims

1. Rotary device for a horizontal injection moulding machine with a base plate (26) and a rotary plate (36) mounted rotatably on the base plate, **characterised by** a module frame (20), in which the base plate with the rotary plate is mounted displaceably.

2. Rotary device according to claim 1, **characterised in that** the module frame comprises guides (28) for a moveable mould set-up plate (4).

3. Rotary device according to claim 2, **characterised in that** the module frame comprises assembly means (30) for a fixed mould set-up plate (2).

4. Rotary device according to claim 1, 2 or 3, **characterised in that** in the module frame there are driving means (24) for displacing the base plate.

5. Rotary device according to claim 4, **characterised in that** the driving means consists of a hydraulic cylinder.

6. Rotary device according to claim 4, **characterised in that** the driving means consists of a fixed and a moveable gear rack and a pinion which is connected to the base plate.

7. Rotary device according to one of claims 1 to 6, **characterised in that** the base plate is designed as a frame with recesses.

8. Rotary device according to one of claims 1 to 7, **characterised in that** the module frame comprises fastening means for securing to the machine bed of an injection moulding machine.

9. Horizontal injection moulding machine with a rotary device according to one of the preceding claims.

## Revendications

1. Dispositif rotatif pour une machine à mouler par injection horizontale avec une plaque de base (26) et un plateau tournant (36) logé sur la plaque de base de manière à pouvoir tourner, **caractérisé par** un cadre de module (20) dans lequel la plaque de base est montée avec le plateau tournant de manière à pouvoir être déplacée.

2. Dispositif rotatif selon la revendication 1, **caractérisé en ce que** le cadre de module comporte des guidages (28) pour une plaque de fixation du moule (4) mobile.

3. Dispositif rotatif selon la revendication 2, **caractérisé en ce que** le cadre de module comporte des moyens de montage (30) pour une plaque de fixation du moule fixe (2).

4. Dispositif rotatif selon la revendication 1, 2 ou 3, **caractérisé en ce que** des moyens d'entraînement (24) sont prévus pour déplacer la plaque de base dans le cadre de module.

5. Dispositif rotatif selon la revendication 4, **caractérisé en ce que** les moyens d'entraînement sont des vérins hydrauliques.

6. Dispositif rotatif selon la revendication 4, **caractérisé en ce que** les moyens d'entraînement comportent une crémaillère fixe et une crémaillère mobile, ainsi qu'un pignon qui est relié à la plaque de base.

7. Dispositif rotatif selon une des revendications 1 à 6, **caractérisé en ce que** la plaque de base a la forme d'un cadre doté d'évidements.

8. Dispositif rotatif selon une des revendications 1 à 7, **caractérisé en ce que** le cadre de module comporte des moyens de fixation pour la fixation sur le lit d'une machine à mouler par injection.

9. Machine à mouler par injection horizontale avec un dispositif rotatif selon une des revendications précédentes.
